# EUROPÄISCHE PATENTSCHRIFT

(11) **EP 1 682 321 B1**
(45) Veröffentlichungstag und Bekanntmachung des Hinweises auf die Patenterteilung: **17.03.2010**
(21) Anmeldenummer: 04797762.4
(22) Anmeldetag: 05.11.2004
(51) Int. Cl.: B29C 43/14, B29C 43/18

(54) **HERSTELLUNG EINER FAHRZEUG-INNENVERKLEIDUNG**
PRODUCTION OF THE INNER LINING OF A VEHICLE
PROCEDE POUR PRODUIRE UN REVETEMENT INTERIEUR DE VEHICULE

(30) Priorität: 05.11.2003 DE 10352513
(43) Veröffentlichungstag der Anmeldung: 26.07.2006
(73) Patentinhaber: Faurecia Innenraum Systeme GmbH, 76767 Hagenbach (DE)
(72) Erfinder: NICKEL, Carsten, 34260 Kaufungen (DE); REICHEL, Kathrin, 36251 Bad Hersfeld (DE); GASSAN, Jochen, 76829 Landau (DE); GÜNTHER, Peter, 64625 Bensheim (DE)
(74) Vertreter: Pfenning, Meinig & Partner GbR
(86) Internationale Anmeldenummer: PCT/EP2004/012697
(87) Internationale Veröffentlichungsnummer: WO 2005/044535

(56) Entgegenhaltungen:
- DE-A1- 4 233 622
- DE-A1- 4 305 200
- FR-A- 2 794 680
- US-A- 4 781 956
- PATENT ABSTRACTS OF JAPAN Bd. 1996, Nr. 07, 31. Juli 1996 (1996-07-31) & JP 08 057981 A (KASAI KOGYO CO LTD), 5. März 1996 (1996-03-05)
- PATENT ABSTRACTS OF JAPAN Bd. 1998, Nr. 06, 30. April 1998 (1998-04-30) & JP 10 034683 A (KASAI KOGYO CO LTD), 10. Februar 1998 (1998-02-10)

## Beschreibung

Die Erfindung betrifft ein Verfahren zur Herstellung eines Formteils aus einem Trägerteil und einem Dekorelement, wobei die Verbindung dieser Bauteile durch ein duroplastisches Adhäsionsmittel erfolgt. Ebenso betrifft die Erfindung die Verwendung derartig hergestellter Formteile als Innenverkleidung im Fahrzeugbau, z. B. als Türseitenteile, Dachhimmel oder Armaturentafeln.

Im Innenraum von Fahrzeugen wird eine Vielzahl von Formteilen eingesetzt, beispielsweise Türseitenteile, Dachhimmel, Armaturenbretter oder Instrumententafeln. Derartige Formteile bestehen üblicherweise aus einem Trägerteil, das mit einem Dekorelement beschichtet ist. Trägerteile bestehen dabei in der Regel aus Kunststoffen oder Kunststoff-haltigen Verbundwerkstoffen, wie z. B. Acrylnitril-Styrol-Butadien(ABS), Polypropylen, Polyethylen oder Polystyrol. Ebenso kommen als Trägermaterialien Faserverbundstoffe auf Basis textiler Flächengebilde aus Hanf, Sisal, Flachs, Glasfasern sowie aus Holzwerkstoffen in Form von Holzmehl oder Holzspänen oder auch Papier, gebunden mit duroplastischen Bindemitteln, in Frage. Ein weiterer Werkstoff für derartige Trägerteile basiert auf geschäumten Materialien aus Polyurethan oder Epoxidharzen, die gegebenenfalls auch glasfaserverstärkt sein können.

Die Herstellung derartiger Formteile nach dem Stand der Technik erfolgt über eine Verbindung des Trägerteils mit dem Dekorelement. Üblicherweise erfolgt dies unter Verwendung von Klebstoffen, insbesondere in Form von Schmelzklebstoffen oder Dispersionen, die mit Hilfe von Walzen, Düsen oder Sprühgeräten auf die zu verklebende Grenzfläche des Trägerteils oder des Dekorelementes aufgetragen werden. Häufig werden die Klebstoffe vor der endgültigen Fertigstellung des Formteils auf die bahnenförmigen Vorprodukte aufgetragen, so dass sie vor dem Fügen der Teile reaktiviert werden müssen. Dabei sind Temperaturen von 150 °C bis über 250 °C erforderlich. Das Problem hierbei ist, dass es häufig zu Verformungen, Delaminierungen, Verbrennungen oder Zerstörungen des bahnförmigen Dekormaterials kommt. Die Reaktivierung der Klebstoffe erfordert während des Fügeprozesses Oberflächentemperaturen von mehr als 120 °C, um einen ausreichenden Klebeverbund der Schichten zu erreichen. Dieser hohe Energieeintrag führt häufig zu Spannungen im Verbundmaterial und teilweise zur Zerstörung der Formteile, zumindest an deren Oberfläche.

In der US 4 781 956 ist ein Innenverkleidungselement für Fahrzeuge beschrieben, das faserförmiges Material bestehend aus 80 % Holzfaser und 20 % synthetischer Kunstfaser enthält. Dieses wird unter Druck- und Wärmeeinwirkung geformt.

Die DE 43 05 200 A1 bezieht sich auf ein Verfahren zur Herstellung eines Innenverkleidungsteils, wie z.B. einer Türverkleidung für Fahrzeuge, bei dem ein formstabiles Trägerteil und eine tiefziehfähige Kaschierfolie mittels Hinterschäumen verbunden werden und ein Insert aufgebracht wird.

Aus der DE 102 10 477 ist ein Verfahren zum Verbinden flächiger Formteile bekannt, bei dem eine wässrige Klebstoffdispersion auf die zu verbindende Grenzfläche mindestens eines der beiden zu verbindenden Formteile aufgetragen wird und anschließend die wässrige Dispersion mit Hilfe von elektromagnetischer Strahlung, vorzugsweise NIR-Strahlung, getrocknet wird. Hiernach erfolgt eine thermische Aktivierung der mit der wässrigen Klebstoffdispersion beschichteten Grenzflächen, bevor die Formteile durch Verpressen gefügt werden.

Dieses Verfahren bringt den Nachteil mit sich, dass ein zusätzlicher Energieeintrag erforderlich ist, um den Klebstoff zu reaktivieren und somit das Fügen von Trägerteil und Dekorelement zu ermöglichen.

Ausgehend hiervon war es Aufgabe der vorliegenden Erfindung, ein Verfahren zur Herstellung eines Formteils bereitzustellen, das gegenüber dem Stand der Technik geringere gerätetechnische Anforderungen stellt und eine kostengünstigere Herstellung ermöglicht.

Diese Aufgabe wird durch das Verfahren zur Herstellung eines Formteils mit den Merkmalen des Anspruchs 1 gelöst. Die weiteren abhängigen Ansprüche zeigen vorteilhafte Weiterbildungen auf. In Anspruch 14 wird die Verwendung der erfindungsgemäßen Formteile beschrieben.

Erfindungsgemäß wird ein Verfahren zur Herstellung eines Formteils bereitgestellt, das auf folgenden Verfahrensschritten beruht:
a) Verpressung eines duroplastischen Halbzeugs in einem Heißpresswerkzeug zu einem Trägerteil bei einer Temperatur ≥ 200°C erfolgt und
b) Abkühlen des Trägerteils auf eine Temperatur von 100 bis 180°C unter duroplastischer Aushärtung des Trägerteils,
c) Aufkaschieren mindestens eines Dekorelements, das an der mit dem Trägerteil zu verbindenden Oberfläche zumindest bereichsweise mit einem duroplastischen Adhäsionsmittel mit einer Reaktionstemperatur, die niedriger als die Abkühlungstemperatur in Schritt b) ist, versehen ist, auf mindestens einer Oberfläche des Trägerteils unter Ausnutzung dessen Restwärme ohne zusätzliches Aufheizen des Trägerteils, wobei das Trägerteil beim Aufkaschieren eine Temperatur im Bereich von 100 bis 180°C aufweist.

Das erfindungsgemäße Verfahren basiert auf einem Heißpress-Verfahren, das es bei den genannten Temperaturen zwischen 100 bis 180° C ermöglicht, das Trägerteil weiter zu verarbeiteten, d.h. zu kaschieren, ohne die Formstabilität zu beeinträchtigen. Diese Formstabilität im Temperaturbereich zwischen 100 bis 180° C beruht darauf, dass eine duroplastische Aushärtung des Pressteils, d.h. Trägerteils, erfolgt ist. Andere aus dem Stand der Technik bekannte Verfahren, wie z.B. das Spritzguß-Verfahren, können die Formstabilität im genannten Temperaturbereich nicht gewährleisten.

Die Besonderheit des erfindungsgemäßen Verfahrens beruht darauf, dass das Aufkaschieren unter Ausnutzung der Restwärme des Trägerteils aufgrund der Verpressung des Halbzeugs im Heißpresswerkzeug bei über 200 °C erfolgt. Hierdurch wird eine Reaktivierung des Adhäsionsmittels, die einen zusätzlichen Energieeintrag erfordert, vermieden. Dies bedeutet, dass ein separates Aufheizen des Trägerteils, was einen erneuten Energieeintrag und damit einen zusätzlichen Aufwand hinsichtlich der Kosten als auch der Dauer der Verfahrensführung bedeutet, eingespart werden kann.

Die Tatsache, dass auf eine zusätzliche Reaktivierung verzichtet werden kann, ermöglicht in einer Variante, dass das Verfahren in einem einzigen Unterwerkzeug durchgeführt werden kann, was das Verfahren deutlich ökonomischer macht.

Bevorzugt wird das Trägerteil für den Prozessschritt des Aufkaschierens auf eine Temperatur im Bereich von 130 bis 170° C abgekühlt.

Vorzugsweise wird das Adhäsionsmittel in Form eines Films, eines Vlieses oder einer Folie verwendet. Gerade die Verwendung eines Vlieses oder einer Folie bringt den Vorteil mit sich, dass auf das teuere und aufwendige Aufsprühen eines Adhäsionsmittels verzichtet werden kann, wodurch das Verfahren sehr umweltfreundlich wird. Das Adhäsionsmittel weist dabei eine Reaktionstemperatur auf, die kleiner als die Temperatur des Heißpresswerkzeugs und deutlich höher als Raumtemperatur ist. Hierbei weist das Adhäsionsmittel vorzugsweise eine Reaktionstemperatur zwischen 100 und 180 °C, bevorzugt zwischen 120 und 160 °C und besonders bevorzugt von 150 °C auf.

Wird ein Adhäsionsmittel in Form einer Folie verwendet, so eignet sich hierfür besonders eine Folie aus einem thermoplastischen Elastomer (TPE) oder einem Copolyester. Dies ermöglicht eine besonders gute Anhaftung des Adhäsionsmittels an der Folie und bringt den Vorteil mit sich, dass ein späteres Ablösen, z. B. aufgrund von Temperaturwechseltests, ausgeschlossen ist.

Aus stofflicher Sicht können sämtliche duroplastischen Adhäsionsmittel verwendet werden. Bevorzugt besteht das Adhäsionsmittel aber aus einem Polyurethan, einem radikalisch polymerisierten Polymer oder deren Gemischen. Das Polyurethan ist dabei vorzugsweise aus Diisocyanaten, Polyetherdiolen und/oder Polyesterdiolen aufgebaut. In einer vorteilhaften Weiterbildung enthält das Adhäsionsmittel Verbindungen, die im Mittel zwischen 2 und 10 Carbodiimidgruppen pro Molekül aufweisen. Darüber hinaus ist es vorteilhaft, wenn das Adhäsionsmittel lagerungsbeständig ist.

Als Dekorelemente kommen vorzugsweise Polymere, Leder, Textil, Schaum und/oder deren Verbundsysteme in Frage. Besonders bevorzugt sind hier Polypropylen (PP) oder Gemische aus PP und Polyethersulfon (PES) in Form von Fliesen.

Vorzugsweise ist das für das Dekorelement verwendete Polymer ausgewählt aus der Gruppe Polyester, Polyethylen, Terephthalat, Polyacetat, Polyolefin, wie Polypropylen oder Polyvinylchlorid, oder deren Copolymere.

Als Trägerteil wird vorzugsweise ein Kunststoff oder ein kunststoffhaltiges Verbundsystem verwendet. Hierzu zählt beispielsweise Acryl-Butadien-Styrol-Copolymer (ABS).

Besonders bevorzugt wird als Trägerteil ein Verbundsystem aus 60-80 Gew.-% Holzfasern, 15-30 Gew.-% Polyester-Fasern und 5-15 Gew.-% duroplastischem Bindemittel verwendet. Als duroplastisches Bindemittel bieten sich hierbei Phenolharze sowie Acrylat-Bindemittel an.

Erfindungsgemäß ist ebenso die Verwendung des Verfahrens nach einem der Ansprüche 1 bis 13 zur Herstellung eines Formteils als Innenverkleidung im Fahrzeugbau. Beispielhafte Bauteile sind hier z. B. Türenseitenteile, Dachhimmel, Armaturenbretter, oder Karosseriesäulen.

Zur näheren Erläuterung sollen die nachfolgenden Figuren und Beispiele dienen, die allerdings nur exemplarischen Charakter besitzen und nicht die gesamte Breite des erfindungsgemäßen Gegenstandes abdecken.
- Fig. 1: zeigt den Verpressungsschritt eines Formteils in einem Heißpresswerkzeug.
- Fig. 2: zeigt den Kaschiervorgang eines erfindungsgemäßen Formteils.

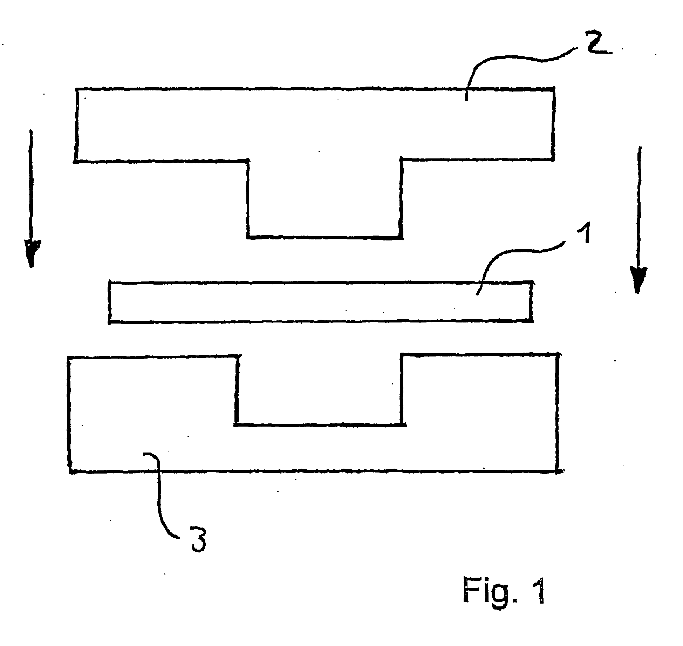

In Fig. 1 wird eine Holzfaserformstoffmatte 1 in einem Heißpresswerkzeug, das aus einem oberen Heißpresswerkzeug 2 und einem unteren Heißpresswerkzeug 3 verpresst wird. Die Verpressung erfolgt hierbei bei 230 °C über einen Zeitraum von 30 Sekunden.

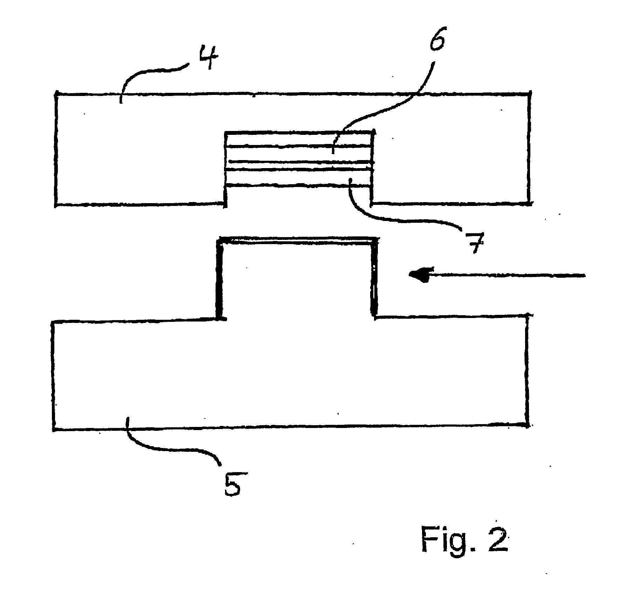

Gleichzeitig kann in das Kaschierwerkzeug, das aus einem oberen Kaschierwerkzeug 4 und einem unteren Kaschierwerkzeug 5 besteht, das ausgewählte Dekorelement 6 mit dem lagerstabilen Adhäsionsmittel 7 eingelegt werden (siehe Fig. 2).

Nach Beendigung des Heißpressvorgangs wird das Bauteil aus der Presse entnommen und in die Kaschierform des Kaschierwerkzeuges (Restwärme des Bauteils ca. 150 °C) gelegt. Anschließend erfolgt die Kaschierung bei 20 bar über einen Zeitraum von 60 Sekunden.

Nach Ablauf des Kaschiervorgangs kann das fertig kaschierte Formteil entnommen werden und der Zyklus von vorne beginnen.

### Beispiel 1

Zunächst wird eine Matte Lignoprop (Holzfaserformstoff) in ein Standardheißpresswerkzeuge eingelegt und bei 220°C (bzw. bei mehr als 200°C) länger als 20 s verpresst. Nach dem Verpressen öffnet sich die Presse und das hergestellte dreidimensional verformte Trägerteil verbleibt in dem Heißpresswerkzeug so lange, bis die Temperatur an der Oberfläche des Trägerteils auf weniger als 150 °C abgekühlt ist.

Über das im Unterwerkzeug der Presse verbliebene Trägerteil wird passgenau ein Rahmen eingefahren. In diesem Rahmen befindet sich das zu kaschierende Dekor und auf dessen Rückseite haftet die Klebeschicht, die wiederum der Oberfläche des Trägerteiles zugewandt ist. In diesem Standardheißpresswerkzeug sind in dem Unterwerkzeug Bohrungen eingebracht, die zum Zweck des Vakuumkaschierens benötigt werden.

Der Prozess des Vakuumkaschierens wird in Gang gesetzt und das mit einer Kleberschicht behaftete Dekor wird auf die Oberfläche des Trägerteiles aufgezogen, wobei zur Aktivierung des Klebers die Restwärme des Trägerteils genutzt wird. Der Kleber schmilzt auf, und verteilt sich gleichmäßig auf der Oberfläche des Trägerteiles. Während das Trägerteil weiter abkühlt, reagiert der Kleber aus und verbindet dabei das Dekor mit dem duroplastisch gebundenen Trägerteil. Der hier aufgeführte Vakuumkaschierprozess dauert weniger als 30 s.

### Beispiel 2

Zunächst wird eine Matte Lignoprop (Holzfaserformstoff) in ein Standardheißpresswerkzeug eingelegt und bei mehr als 200 °C, länger als 30 s verpresst. Nach dem Verpressen öffnet sich die Presse und das dreidimensional verformte Trägerteil wird in ein kaltes Vakuumkaschierwerkzeug eingelegt bis auf eine Temperatur kleiner 150 °C abgekühlt. Oberhalb dieses Vakuumkaschierwerkzeuges befindet sich das mit einer Kleberschicht behaftete Dekor, das nun mit Hilfe des Vakuumkaschierprozesses auf die Oberfläche des Trägerteiles aufgezogen wird, wobei zur Aktivierung des Klebers die Restwärme des Trägerteiles genutzt wird. Der Kleber schmilzt auf und verteilt sich gleichmäßig auf der Oberfläche des Trägerteiles. Während das Trägerteil weiter abkühlt, reagiert der Kleber aus und verbindet dabei das Dekor mit dem duroplastisch gebundenen Trägerteil. Der hier aufgeführte Vakuumkaschierprozess dauert weniger als 30 s.

## Patentansprüche

1. Verfahren zur Herstellung eines Formteils durch
a) Verpressung eines duroplastischen Halbzeugs in einem Heißpresswerkzeug (2,3) zu einem Trägerteil (1) bei einer Temperatur ≥ 200°C erfolgt und
b) Abkühlen des Trägerteils (1) auf eine Temperatur von 100 bis 180°C unter duroplastischer Aushärtung des Trägerteils (1),
c) Aufkaschieren mindestens eines Dekorelements (6), das an der mit dem Trägerteil (1) zu verbindenden Oberfläche zumindest bereichsweise mit einem duroplastischen Adhäsionsmittel (7) mit einer Reaktionstemperatur, die niedriger als die Abkühlungstemperatur in Schritt b) ist, versehen ist, auf mindestens einer Oberfläche des Trägerteils (1) unter Ausnutzung dessen Restwärme ohne zusätzliches Aufheizen des Trägerteils (1), wobei das Trägerteil (1) beim Aufkaschieren eine Temperatur im Bereich von 100 bis 180°C aufweist.

2. Verfahren nach Anspruch 1,
**dadurch gekennzeichnet, dass** das Trägerteil (1) für das Aufkaschieren auf eine Temperatur im Bereich von 130 bis 170°C abgekühlt wird.

3. Verfahren nach einem der Ansprüche 1 oder 2,
**dadurch gekennzeichnet, dass** das Adhäsionsmittel (7) in Form eines Films, eines Vlieses oder einer Folie verwendet wird.

4. Verfahren nach einem der Ansprüche 1 bis 3,
**dadurch gekennzeichnet, dass** das Adhäsionsmittel (7) eine Reaktionstemperatur zwischen 100 und 180°C, bevorzugt zwischen 120 und 160°C und besonders bevorzugt von 150°C besitzt.

5. Verfahren nach einem der Ansprüche 1 bis 4,
**dadurch gekennzeichnet, dass** das Adhäsionsmittel (7) aus einem Polyurethan, einem radikalisch polymerisierten Polymer oder deren Gemischen besteht.

6. Verfahren nach Anspruch 5,
**dadurch gekennzeichnet, dass** das Polyurethan aus Diisocyanaten, Polyetherdiolen und/oder Polyesterdiolen aufgebaut ist.

7. Verfahren nach einem der Ansprüche 1 bis 6,
**dadurch gekennzeichnet, dass** das Adhäsionsmittel (7) Verbindungen mit 2 bis 10 Carbodiimidgruppen pro Molekül enthält.

8. Verfahren nach einem der Ansprüche 1 bis 7,
**dadurch gekennzeichnet, dass** das Adhäsionsmittel (7) lagerungsbeständig ist.

9. Verfahren nach einem der Ansprüche 1 bis 8,
**dadurch gekennzeichnet, dass** Dekorelemente (6) aus einem Polymer, Leder, Textil, Schaum und/oder deren Verbundsystemen verwendet werden.

10. Verfahren nach Anspruch 9,
**dadurch gekennzeichnet, dass** das Polymer ausgewählt ist aus der Gruppe Polyester, Polyethylenterephthalat, Polyacetat, Polyolefin, wie Polypropylen oder Polyvinylchlorid, oder deren Copolymeren.

11. Verfahren nach einem der Ansprüche 1 bis 10,
**dadurch gekennzeichnet, dass** als Trägerteil (1) ein duroplastischer Kunststoff oder deren Verbundsysteme verwendet wird.

12. Verfahren nach Anspruch 11,
**dadurch gekennzeichnet, dass** als Kunststoff Acryl-Butadien-Styrol-Copolymer (ABS) verwendet wird.

13. Verfahren nach Anspruch 12,
**dadurch gekennzeichnet, dass** ein Verbundsystem aus 60 bis 80 Gew.-% Holzfasern, 15 bis 30 Gew.-% Polyester-Fasern und 5 bis 15 Gew.-% duroplastischen Bindemitteln verwendet wird.

14. Verwendung des Verfahrens nach einem der Ansprüche 1 bis 13 zur Herstellung eines Formteils als Innenverkleidung im Fahrzeugbau, z.B. Türseitenteile, Dachhimmel, Armaturenbretter oder Instrumententafeln.

## Claims

1. A method of producing a moulded part by
a) pressing a thermosetting semi-finished product, [which] is carried out in a hot-pressing tool (2, 3) at a temperature ≥ 200°C to form a carrier part (1), and
b) cooling the carrier part (1) to a temperature of from 100 to 180°C with thermosetting hardening of the carrier part (1),
c) laminating at least one decorative element (6) - which on the surface to be joined to the carrier part (1) is provided at least locally with a thermosetting adhesive (7) with a reaction temperature which is lower than the cooling temperature in step b) - on at least one surface of the carrier part (1) whilst using the residual heat thereof without additionally heating the carrier part (1), wherein the carrier part (1) has a temperature in the range of from 100 to 180°C during the laminating.

2. A method according to Claim 1, **characterized in that** the carrier part (1) for the laminating is cooled to a temperature in the range of from 130 to 170°C.

3. A method according to one of Claims 1 or 2, **characterized in that** the adhesive (7) is used in the form of a film, a non-woven fabric or a foil.

4. A method according to any one of Claims 1 to 3, **characterized in that** the adhesive (7) has a reaction temperature of between 100 and 180°C, preferably of between 120 and 160°C, and in a particularly preferred manner of 150°C.

5. A method according to any one of Claims 1 to 4, **characterized in that** the adhesive (7) consists of a polyurethane, a radically polymerized polymer or mixtures thereof.

6. A method according to Claim 5, **characterized in that** the polyurethane is formed from diisocyanates, polyether diols and/or polyester diols.

7. A method according to any one of Claims 1 to 6, **characterized in that** the adhesive (7) contains compounds with from 2 to 10 carbodiimide groups *per* molecule.

8. A method according to any one of Claims 1 to 7, **characterized in that** the adhesive (7) is shelf-stable.

9. A method according to any one of Claims 1 to 8, **characterized in that** decorative elements (6) from a polymer, leather, textile, foam and/or composite systems thereof are used.

10. A method according to Claim 9, **characterized in that** the polymer is selected from the group of polyester, polyethylene terephthalate, polyacetate, polyolefin, such as polypropylene or polyvinyl chloride, or copolymers thereof.

11. A method according to any one of Claims 1 to 10, **characterized in that** a thermosetting plastics material or composite systems thereof is or are used as the carrier part (1).

12. A method according to Claim 11, **characterized in that** acrylonitrile butadiene styrene copolymer (ABS) is used as the plastics material.

13. A method according to Claim 12, **characterized in that** a composite system of from 60 to 80 % by weight of wood fibres, from 15 to 30 % by weight of polyester fibres and from 5 to 15 % by weight of thermosetting binders is used.

14. Use of the method according to any one of Claims 1 to 13 for producing a moulded part as an inner lining in vehicle construction, for example door side panels, roof canopies, dashboards or instrument panels.

## Revendications

1. Procédé de fabrication d'une pièce moulée par
a) pressage, s'effectuant à une température ≥200 °C d'un produit semi-fini thermodurcissable dans un moule de pressage à chaud (2, 3) pour donner une pièce support (1) et
b) refroidissement de la pièce de support (1) jusqu'à une température de 100 à 180 °C avec thermodurcissement de la pièce support (1),
c) contre-collage d'au moins un élément décoratif (6) qui est doté, au moins dans certaines zones de la surface à assembler avec la pièce support (1) d'un agent adhésif thermodurcissable (7) ayant une température de réaction inférieure à la température de refroidissement à l'étape b), sur au moins une surface de la pièce support (1) en exploitant la chaleur résiduelle de la pièce support (1), sans chauffage supplémentaire de la pièce support (1), la pièce support (1) présentant lors du contre-collage une température dans l'intervalle de 100 à 180 °C.

2. Procédé selon la revendication 1,
**caractérisé en ce que** la pièce support (1) est refroidie pour le contre-collage jusqu'à une température dans l'intervalle de 130 à 170 °C.

3. Procédé selon l'une quelconque des revendications 1 ou 2,
**caractérisé en ce que** l'agent adhésif (7) est utilisé sous la forme d'un film, d'un non-tissé ou d'une feuille.

4. Procédé selon l'une quelconque des revendications 1 à 3,
**caractérisé en ce que** l'agent adhésif (7) possède une température de réaction entre 100 et 180 °C, de préférence entre 120 et 160 °C et de façon particulièrement préférée de 150 °C.

5. Procédé selon l'une quelconque des revendications 1 à 4,
**caractérisé en ce que** l'agent adhésif (7) consiste en un polyuréthane, en un polymère polymérisé par polymérisation radicalisée ou en leurs mélanges.

6. Procédé selon la revendication 5,
**caractérisé en ce que** le polyuréthane est formé à partir de diisocyanates, de polyéthers de diols et/ou de polyesters de diols.

7. Procédé selon l'une quelconque des revendications 1 à 6,
**caractérisé en ce que** l'agent adhésif (7) contient des composés avec 2 à 10 groupes carbodiimides par molécule.

8. Procédé selon l'une quelconque des revendications 1 à 7,
**caractérisé en ce que** l'agent adhésif (7) est stockable.

9. Procédé selon l'une quelconque des revendications 1 à 8,
**caractérisé en ce que** l'on utilise des éléments décoratifs (6) en un polymère, en cuir, en textile, en mousse et/ou en leurs systèmes composites.

10. Procédé selon la revendication 9,
**caractérisé en ce que** le polymère est choisi parmi le groupe des polyesters, du polyéthylène férephtalate, des polyacétates, des polyoléfines comme le polypropylène, ou du polychlorure de vinyle ou de leurs copolymères.

11. Procédé selon l'une quelconque des revendications 1 à 10,
**caractérisé en ce que** comme pièce support (1), on utilise une matière plastique thermodurcissable ou ses systèmes composites.

12. Procédé selon la revendication 11,
**caractérisé en ce que** comme matière plastique, on utilise un copolymère acrylobutadiène-styrène (ABS).

13. Procédé selon la revendication 12,
**caractérisé en ce qu'**un système composite en 60 à 80 % en poids de fibres de bois, 15 à 30 % en poids de fibres de polyester et 5 à 15 % en poids de liant thermodurcissable est utilisé.

14. Utilisation du procédé selon l'une quelconque des revendications 1 à 13 à la fabrication d'une pièce moulée comme habillage intérieur de véhicules, par exemple des pièces latérales de portes, des ciels de pavillon, des planches de bord ou des tableaux de bord.
